# EUROPÄISCHE PATENTANMELDUNG

(11) **EP 2 458 947 A2**
(43) Veröffentlichungstag der Anmeldung: **30.05.2012**
(21) Anmeldenummer: 11008400.1
(22) Anmeldetag: 19.10.2011
(51) Int. Cl.: H05B 37/02

(54) **Datentelegramm-Generierungsverfahren zur Ansteuerung mindestens eines Lastmoduls bzw. einer Lampe über eine Lastleitung**

(30) Priorität: 26.11.2010 DE 102010052662
(71) Anmelder: ABB AG, 68309 Mannheim (DE)
(72) Erfinder: Goldyn, Dirk, 58454 Witten (DE); Czimmeck, Frank, 58511 Lüdenscheid (DE); Clever, Gerhard, 58553 Halver (DE); Linde, Holger, 44137 Dortmund (DE)

(57) **Zusammenfassung**

Es wird ein Datentelegramm-Generierungsverfahren zur Ansteuerung mindestens eines Lastmoduls bzw. einer Lampe (5, 11) mittels eines am Phasenleiter (L) einer Versorgungsspannungsquelle (8) angeschlossenen Steuergeräts (1) über eine Lastleitung (L') vorgeschlagen, wobei die Übertragung der Helligkeitsinformation mittels Phasenanschnitt oder Phasenabschnitt erfolgt und wobei auf dieses Spannungssignal das Datentelegramm aufmoduliert wird,
• wobei ein Datenbit pro Spannungsvollwelle übertragen wird,
• wobei die Informationen respektive Datenbits durch eine symmetrische Umtastung des Phasenanschnittwinkels oder Phasenabschnittwinkels φ um einen Verschiebungswinkel Δ aufgeprägt werden,
• so dass aufeinanderfolgende Spannungshalbwellen entweder bei φ - Δ / φ + Δ oder bei φ + Δ / φ - Δ angeschnitten werden, je nachdem, ob ein Datenbit "1" oder ein Datenbit "0" zu übertragen ist.

## Beschreibung

Die Erfindung betrifft ein Datentelegramm-Generierungsverfahren zur Ansteuerung mindestens eines Lastmoduls bzw. einer Lampe über eine Lastleitung.

Herkömmliche Systeme zur Helligkeitssteuerung von Lampen / Leuchtmitteln basieren in der Regel auf dem An- oder Abschnitt der Phase der Versorgungsspannung. Es besteht die Anforderung / der Bedarf, zusätzliche Informationen vom Steuergerät respektive Dimmer zum Leuchtmittel zu übertragen, beispielsweise einen Farbtemperaturwert. Ein wichtiges Kriterium bei der Übertragung ist dabei die Kompatibilität zu bestehenden, herkömmlichen Leuchtmitteln, wie Glühlampen, die in ihrem Betrieb nicht gestört werden dürfen, d. h. das Steuergerät (Dimmer) soll weitestgehend kompatibel zu bestehenden Leuchtmitteln und Anschlussszenarien sein, wie insbesondere
- Glühlampen an Netzspannung,
- Glühlampen an einem 12V-Eisenkerntransformator,
- Glühlampen an einem elektronischen 12V-Transformator.

Der Erfindung liegt die Aufgabe zugrunde, ein optimiertes Datentelegramm-Generierungsverfahren zur Ansteuerung mindestens eines Lastmoduls bzw. einer Lampe über eine Lastleitung anzugeben, bei welchem die Lastart berücksichtigt ist. Diese Aufgabe wird erfindungsgemäß gelöst durch ein Datentelegramm-Generierungsverfahren zur Ansteuerung mindestens eines Lastmoduls bzw. einer Lampe mittels eines am Phasenleiter einer Versorgungsspannungsquelle angeschlossenen Steuergeräts über eine Lastleitung, wobei die Übertragung der Helligkeitsinformation mittels Phasenanschnitt oder Phasenabschnitt erfolgt und wobei auf dieses Spannungssignal das Datentelegramm aufmoduliert wird,
- wobei ein Datenbit pro Spannungsvollwelle übertragen wird,
- wobei die Informationen respektive Datenbits durch eine symmetrische Umtastung des Phasenanschnittwinkels oder Phasenabschnittwinkels ϕ um einen Verschiebungswinkel Δ aufgeprägt werden,
- so dass aufeinanderfolgende Spannungshalbwellen entweder bei ϕ - Δ / ϕ +
   Δ oder bei ϕ + Δ / ϕ - Δ angeschnitten werden, je nachdem, ob ein Datenbit "1" oder ein Datenbit "0" zu übertragen ist.

Während das vorstehend angeführte Verfahren insbesondere bei kapazitiven Lastarten geeignet ist, wird bei induktiven Lastarten die zweite Spannungshalbwelle eines Datenbits jeweils in invertierter Form wiederholt, wodurch sich eine Datenbitlänge von jeweils drei Spannungshalbwellen ergibt, so dass aufeinanderfolgende Spannungswellen entweder bei ϕ - Δ / ϕ + Δ / ϕ + Δ oder bei ϕ + Δ / ϕ - Δ / ϕ- Δ angeschnitten werden, je nachdem, ob ein Datenbit "1" oder ein Datenbit "0" zu übertragen ist.

Liegt eine ohmsche Lastart vor, so wird diese Aufgabe erfindungsgemäß gelöst durch ein Datentelegramm-Generierungsverfahren zur Ansteuerung mindestens eines Lastmoduls bzw. einer Lampe mittels eines am Phasenleiter einer Versorgungsspannungsquelle angeschlossenen Steuergeräts über eine Lastleitung, wobei die Übertragung der Helligkeitsinformation mittels Phasenanschnitt oder Phasenabschnitt erfolgt und wobei auf dieses Spannungssignal das Datentelegramm aufmoduliert wird,
- wobei ein Datenbit pro Spannungsvollwelle übertragen wird,
- wobei die Informationen durch einen kurzen Burst von Impulsen mit der Breite eines Verschiebungswinkels Δ rund um den Phasenanschnittwinkel oder PhasenabscnnittwinKel ϕ der einen Spannungshalbwelle sowie eine unmodulierte an- oder abgeschnittene andere Spannungshalbwelle gekennzeichnet ist,
- wobei der Burst bei ϕ - Δ/2 beginnt und bei ϕ + Δ/2 endet.

Die mit der Erfindung erzielbaren Vorteile liegen insbesondere darin, dass die zusätzliche Übertragung von Datentelegrammen über die Lastleitung keine bzw. nur geringe nachteiligen Auswirkungen auf das Verhalten von herkömmlichen Leuchtmitteln wie Glühlampen wie beispielsweise Helligkeitsschwankungen hat. Die vorgeschlagenen Modulationsverfahren zur digitalen Datenübertragung über eine Lastleitung sind in Abhängigkeit des Vorliegens einer kapazitiven, induktiven oder ohmschen Lastart modifizierbar, um derart stets das optimale Verfahren im Hinblick auf eine sichere und möglichst störungsfreie Übertragung auswählen zu können.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein Prinzipschaltbild zur digitalen Datenübertragung zwischen einem Steuergerät (Dimmer) und einem Lastmodul (Lampe inklusive Leuchtmittel),
- Fig. 2: den Datentelegrammaufbau gemäß einem ersten Datentelegramm-Generierungsverfahren,
- Fig. 3: den Datentelegrammaufbau gemäß einem zweiten Datentelegramm-Generierungsverfahren,
- Fig. 4: den Datentelegrammaufbau gemäß einem dritten Datentelegramm-Generierungsverfahren,

- Fig. 5: den Datentelegrammaufbau gemäß einem vierten Datentelegramm-Generierungsverfahren,
- Fig. 6: den prinzipiellen Aufbau eines Lastmoduls,
- Fig. 7: ein erstes Anschlussszenario mit mindestens einer am Steuergerät angeschlossenen LED,
- Fig. 8: ein zweites Anschlussszenario mit mindestens einer am Steuergerät angeschlossenen Glühlampe,
- Fig. 9: ein drittes Anschlussszenario mit mindestens einer am Steuergerät angeschlossenen LED und mindestens einer am Steuergerät angeschlossenen Glühlampe,
- Fig. 10: ein viertes Anschlussszenario mit mindestens einer am Steuergerät über einen Eisenkerntransformator angeschlossenen LED,
- Fig. 11: ein fünftes Anschlussszenario mit mindestens einer am Steuergerät über einen Eisenkerntransformator angeschlossenen Glühlampe,
- Fig. 12: ein sechstes Anschlussszenario mit mindestens einer am Steuergerät über einen Eisenkerntransformator angeschlossenen LED und mindestens einer Glühlampe,
- Fig. 13: ein siebtes Anschlussszenario mit mindestens einer am Steuergerät über einen elektronischen Transformator angeschlossenen LED,
- Fig. 14: ein achtes Anschlussszenario mit mindestens einer am Steuergerät über einen elektronischen Transformator angeschlossenen Glühlampe,
- Fig. 15: ein neuntes Anschlussszenario mit mindestens einer am Steuergerät über einen elektronischen Transformator angeschlossenen LED und mindestens einer Glühlampe.

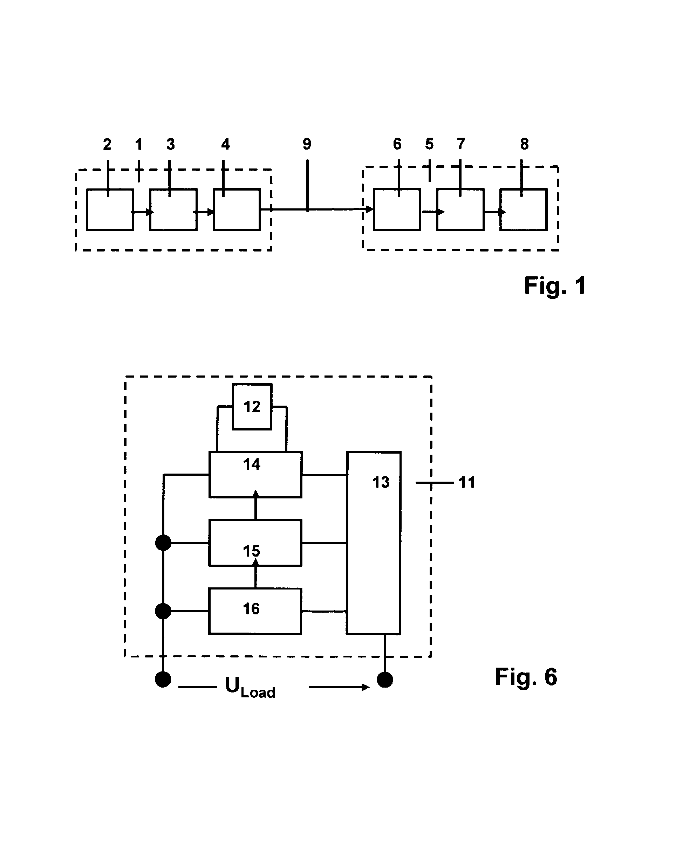

In Fig. 1 ist ein Prinzipschaltbild zur digitalen Datenübertragung zwischen einem Steuergerät respektive einem Dimmer und einem Lastmodul respektive einer Lampe inklusive Leuchtmittel über eine Lastleitung dargestellt. Es ist ein Steuergerät (Dimmer) 1 zu erkennen, welches über einen Übertragungskanal 9 - eine Lastleitung - mit einem Lastmodem (Lampe inklusive Leuchtmittel und Leistungsglied + Ansteuerschaltung) 5 verbunden ist. Für die Datenübertragung speist eine Datenquelle 2 des Steuergerätes 1 über einen Kanalkodierer 3 und einen Modulator 4 in den Übertragungskanal 9 ein, während eine Datensenke 8 des Lastmoduls 5 die übertragenen Datentelegramme über einen Demodulator 6 und einen Kanaldekodierer 7 für die Auswertung der übertragenen Datentelegramme empfängt. Dabei erfolgt die digitale Übertragung von Datentelegrammen über eine Lastleitung L' zwischen dem Steuergerät (Dimmer) 1 und verschiedenen bezüglich ihrer Leistung ansteuerbaren (dimmfähigen) Lasten respektive Leuchtmitteln. Mittels der digitalen Datenübertragung soll z. B. eine Änderung der korrelierten Farbtemperatur (CCT, correlated color temperature) des Leuchtmittels initiiert werden. Es kann also durch entsprechende Betätigung des Steuergeräts 1 beispielsweise zwischen warm-weißem zu kalt-weißem Licht gewechselt werden.

Die Übertragung basiert auf einer durch das Steuergerät 1 phasenan- oder abgeschnittenen Wechselspannung. Auf dieses Spannungssignal wird das zu übertragende Datentelegramm aufmoduliert, wobei die Anschnittsphase respektive Abschnittsphase umgetastet wird. Der eigentliche Aufbau der Datentelegramme, die Telegrammlänge und der Inhalt sind in diesem Zusammenhang nicht von Bedeutung. Die Datentelegramme brauchen nur im Falle einer Bedienung durch den Endanwender, im Falle einer automatischen Steuerung oder beim Einschalten des Systems übertragen werden. Da also nicht permanent Daten übertragen werden müssen, hält die sich durch die Datentelegramm-Übertragung gegebenenfalls erzeugte geringfügige Funkstörspannung und geringfügige Beeinflussung herkömmlicher Leuchtmittel, wie Glühlampen, in Grenzen.

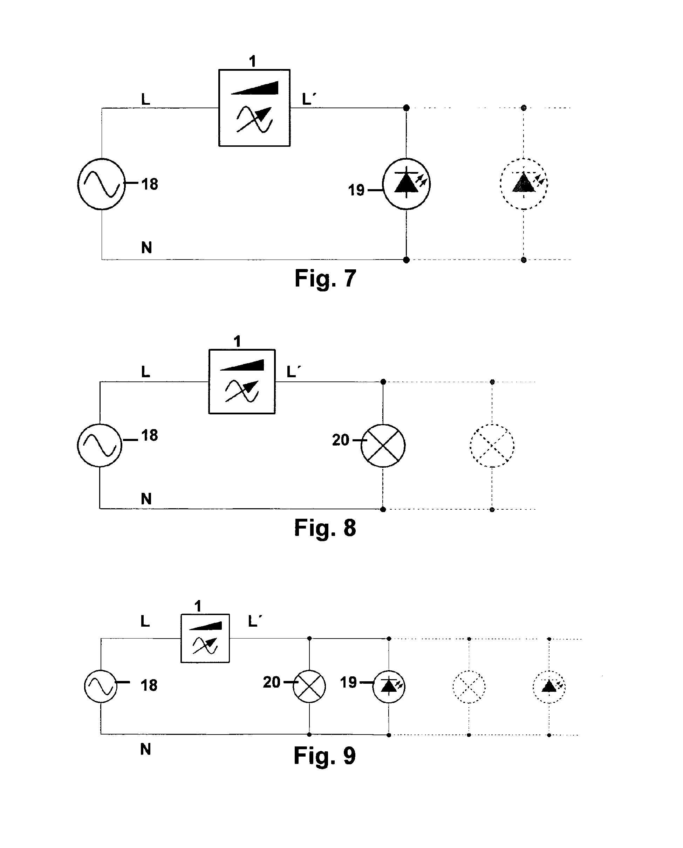

In den nachfolgenden Figuren 7 - 15 sind unterschiedliche, prinzipiell mögliche Anschlussszenarien für Lastmodule respektive Lampen gezeigt, wobei in allen Fällen ein Steuergerät 1 mit seinem ersten Anschluss mit dem Phasenleiter L einer Versorgungsspannungsquelle 18 und mit seinem zweiten Anschluss in Form der Lastleitung L' direkt oder indirekt über einen Eisenkerntransformator 21 oder einen elektronischen Transformator 22 mit dem ersten Anschluss des mindestens einen Lastmoduls verbunden ist. Der zweite Anschluss des mindestens einen Lastmoduls ist direkt oder indirekt über den Eisenkerntransformator 21 oder den elektronischen Transformator 22 mit dem Neutralleiter respektive Nulleiter N der Versorgungsspannungsquelle 18 verbunden.

In Fig. 7 ist ein erstes Anschlussszenario mit mindestens einer am Steuergerät 1 angeschlossenen LED dargestellt, wobei zwischen Lastleitung L' und Neutralleiter N eine einzige LED 19 oder mehrere LEDs angeschlossen sind.

In Fig. 8 ist ein zweites Anschlussszenario mit mindestens einer am Steuergerät 1 angeschlossenen Glühlampe dargestellt, wobei zwischen Lastleitung L' und Neutralleiter N eine einzige Glühlampe 20 oder mehrere Glühlampen angeschlossen sind.

In Fig. 9 ist ein drittes Anschlussszenario mit mindestens einer am Steuergerät 1 angeschlossenen LED und mindestens einer am Steuergerät angeschlossenen Glühlampe dargestellt, wobei zwischen Lastleitung L' und Neutralleiter N mindestens eine LED 19 und mindestens eine Glühlampe 20 angeschlossen sind (Mischlast).

Die vorstehend unter den Figuren 7, 8, 9 behandelten Anschlussszenarien werden nachfolgend auch unter dem Schlagwort "Last an Netzspannung" bezeichnet.

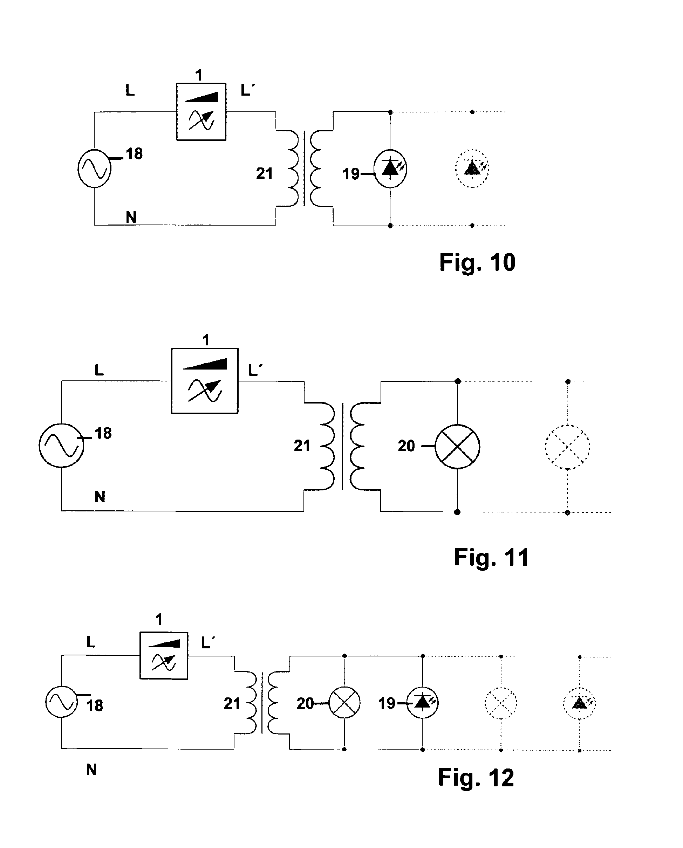

In den Anschlussszenarien gemäß den Figuren 10 - 12 ist ein Eisenkerntransformator 21 über seine Primärwicklung zwischen Lastleitung L' und Neutralleiter N der Versorgungsspannungsquelle 18 geschaltet.

In Fig. 10 ist ein viertes Anschlussszenario mit mindestens einer am Steuergerät 1 über einen Eisenkerntransformator angeschlossenen LED dargestellt, wobei mindestens eine LED 19 an die Sekundärwicklung des Eisenkerntransformators 21 angeschlossen ist.

Fig. 11 ist ein fünftes Anschlussszenario mit mindestens einer am Steuergerät 1 über einen Eisenkerntransformator angeschlossenen Glühlampe dargestellt, wobei mindestens eine Glühlampe 20 an die Sekundärwicklung des Eisenkerntransformators 21 angeschlossen ist.

Fig. 12 ist ein sechstes Anschlussszenario mit mindestens einer am Steuergerät 1 über einen Eisenkerntransformator angeschlossenen LED und mindestens einer Glühlampe dargestellt, wobei mindestens eine LED 19 und mindestens eine Glühlampe 20 an die Sekundärwicklung des Eisenkerntransformators 21 angeschlossen sind (Mischlast).

Die vorstehend unter den Figuren 10, 11, 12 behandelten Anschlussszenarien werden nachfolgend auch unter dem Schlagwort "Last an Eisenkerntransformator" bezeichnet.

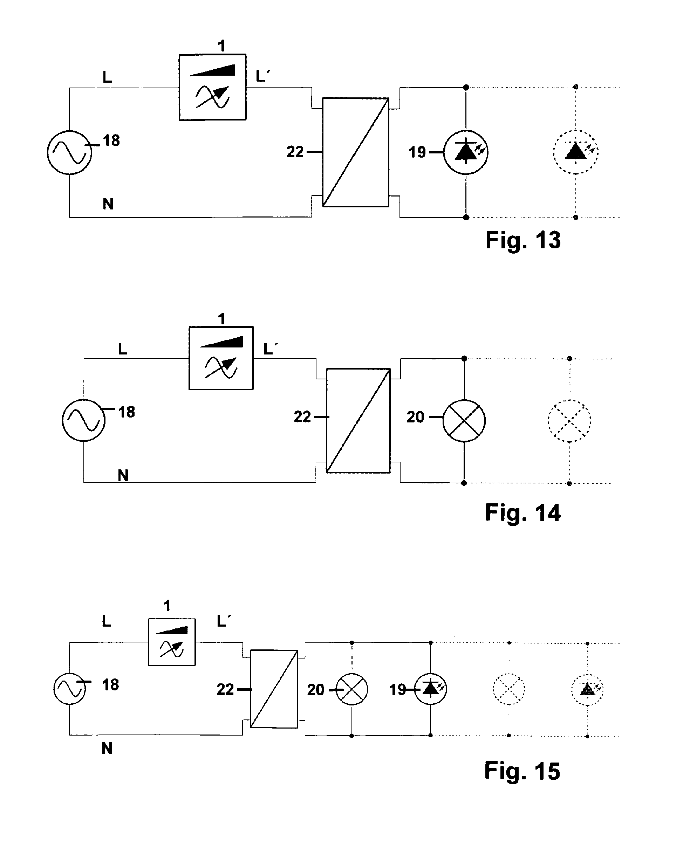

In den Anschlussszenarien gemäß den Figuren 13 - 15 ist ein elektronischer Transformator 22 primärseitig zwischen Lastleitung L' und Neutralleiter N der Versorgungsspannungsquelle 18 geschaltet.

In Fig. 13 ist ein siebtes Anschlussszenario mit mindestens einer am Steuergerät 1 über einen elektronischen Transformator angeschlossenen LED dargestellt, wobei mindestens eine LED 19 an die sekundärseitigen Klemmen des elektronischen Transformators 22 angeschlossen ist.

In Fig. 14 ist ein achtes Anschlussszenario mit mindestens einer am Steuergerät 1 über einen elektronischen Transformator angeschlossenen Glühlampe dargestellt, wobei mindestens eine Glühlampe 20 an die sekundärseitigen Klemmen des elektronischen Transformators 22 angeschlossen ist.

In Fig. 15 ist ein neuntes Anschlussszenario mit mindestens einer am Steuergerät 1 über einen elektronischen Transformator angeschlossenen LED und mindestens einer Glühlampe dargestellt, wobei mindestens eine LED 19 und mindestens eine Glühlampe 20 an die sekundärseitigen Klemmen des elektronischen Transformators 22 angeschlossen sind.

Die vorstehend unter den Figuren 13, 14, 15 behandelten Anschlussszenarien werden nachfolgend auch unter dem Schlagwort "Last an elektronischem Transformator" bezeichnet.

In Fig. 6 ist der prinzipiellen Aufbau eines Lastmoduls dargestellt. Das Lastmodul 11 des gezeigten Ausführungsbeispiels umfasst eine LED 12, ein Netzteil 13, ein Leistungsglied 14, z. B. einen "LED Driver" respektive LED-Treiber, eine Ansteuerschaltung 15, z. B. "LED-Control" und einen Dekodierer 16 (z. B. in Form eines Mikrocontrollers) als Empfängerschaltung. Selbstverständlich kann auch eine Glühlampe anstelle einer LED 12 vorgesehen sein. Der Dekodierer 16 wertet das eingehende analoge Spannungs- oder Stromsignal aus, z. B. die am Lastmodul 11 anliegende Spannung U_{Load}, um derart vom Steuergerät 1 generierte Datentelegramme zu empfangen, welche in der Ansteuerschaltung 15 in entsprechende Ansteuersignale für das Leistungsglied 14 umgesetzt werden, d. h. aus dem empfangenen Signal wird ein Bitstrom generiert, der anschließend in Steuerbefehle für den Betrieb des Leistungsglieds 14 gewandelt wird. Dies kann beispielsweise eine Aufforderung sein, die Farbtemperatur der angeschlossenen Last zu ändern.

Das Netzteil 13 dient zur Energieversorgung des Leistungsgliedes 14, der Ansteuerschaltung 15 und des Dekodierers 16. Der Spannung U_{Load} entspricht bei den Anschlussszenarien nach den Figuren 7 - 9 beispielsweise die Spannung zwischen Lastleitung L' und Neutralleiter N.

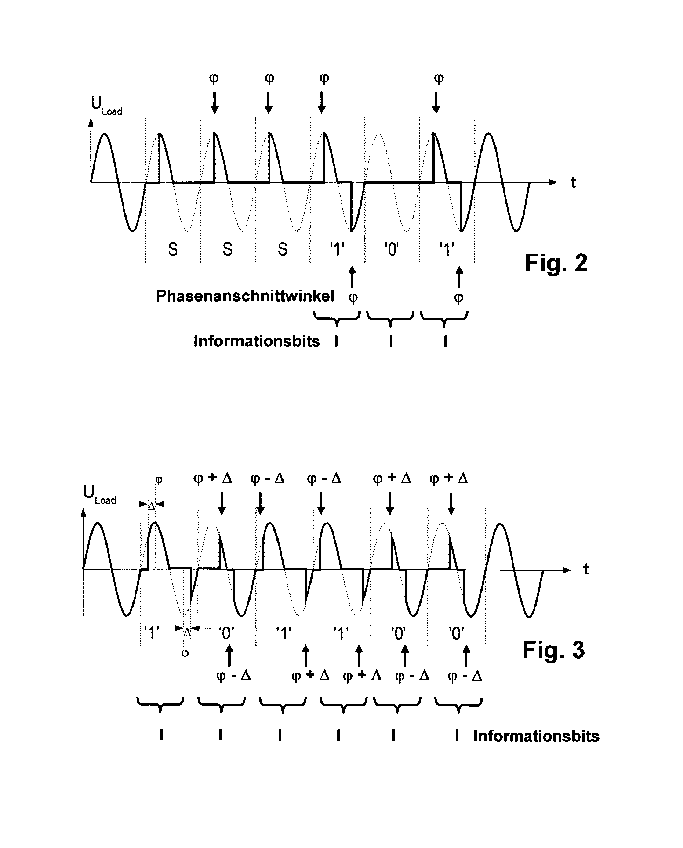

In den Figuren 2 - 5 sind unterschiedliche Datentelegramme gezeigt, wobei jeweils der zeitliche Verlauf der Spannung U_{Load} an der Last respektive Lampe dargestellt ist, d. h. die Abszisse gibt die Zeit t an, während die Ordinate die Spannung U_{Load} zeigt.

In Fig. 2 ist der Datentelegrammaufbau gemäß einem ersten Datentelegramm-Generierungsverfahren dargestellt. Das Datentelegramm besteht aus Startbits "S" einer Startsequenz und aus Informationsbits "I" einer Informationssequenz mit Darstellung einzelner Datenbits mit dem Wert "1" oder dem Wert "0", kurz ausgedrückt Datenbit "1" oder Datenbit "0". Die Datenbitlänge respektive die Bitdauer eines einzelnen Datenbits entspricht einer Spannungsvollwelle (positive Spannungshalbwelle + negative Spannungshalbwelle) der Versorgungsspannung, d. h. 20ms. Ein Startbit "S" ist gekennzeichnet durch eine angeschnittene positive Spannungshalbwelle sowie eine spannungsfreie negative Spannungshalbwelle. Bei den Datenbits der Informationssequenz
- entspricht ein "1"-Wert einer in positiver wie negativer Spannungshalbwelle gleichermaßen angeschnittenen Spannungsvollwelle und
- entspricht ein "0"-Wert einer spannungsfreien Spannungsvollwelle.

Bei dem in Fig. 2 gezeigten beispielhaften Datentelegramm hat die Startsequenz eine Länge aus drei Spannungsvollwellen. Das Helligkeitsniveau ist im gezeigten Beispiel auf 50% eingestellt (Phasenanschnittwinkel ϕ = 90°).

Der Vorteil des ersten Datentelegramm-Generierungsverfahrens gemäß Fig. 2 besteht darin, dass es sich zur Übertragung von Informationen respektive Datenbits für alle vorstehend unter den Figuren 7 - 15 gezeigten Anschlussszenarien eignet (auch für Mischlast). Aufgrund der unsymmetrischen Ansteuerung kommt es jedoch zu Sättigungseffekten bei Einsatz von Eisenkerntransformatoren. Daraus resultiert ein starker Stromimpuls. Ferner verschiebt sich der Nulldurchgang der Spannung am Leuchtmittel, was die Synchronisation im Dekodierer 16 erschwert. Ebenfalls nachteilig für den Datenempfang beim Lastmodul sind durch die Sättigung des Eisenkerntransformators auftretende "Überschwinger", d. h. unerwünschte Stromspitzen. Bei Einsatz von Glühlampen 20 als Leuchtmittel ist während der Datentelegrammübertragung ein Flackern (Helligkeitsschwankungen) zu erkennen.

In Fig. 3 ist der Datentelegrammaufbau gemäß einem zweiten Datentelegramm-Generierungsverfahren dargestellt. Bei diesem Datentelegramm-Generierungsverfahren ist keine Startsequenz vorgesehen. Es werden die Informationen respektive Datenbits durch eine symmetrische Umtastung des Phasenanschnittwinkels (bzw. Phasenabschnittwinkels) ϕ um einen Verschiebungswinkel ± Δ aufgeprägt, welcher vorzugsweise im Bereich 1,5°.....20° liegt. Liegt der Phasenanschnittwinkel bzw. Phasenabschnittwinkels des Helligkeitsniveaus bei ϕ, so ist bei der Übertragung eines Datenbits "1" die positive Spannungshalbwelle bei ϕ - Δ und die negative Spannungshalbwelle bei ϕ + Δ angeschnitten. Für ein Datenbit "0" gilt das Gegenteil, d. h. bei der Übertragung eines Datenbits "0" ist die positive Spannungshalbwelle bei ϕ + A und die negative Spannungshalbwelle bei ϕ - Δ angeschnitten. Es wird wie beim ersten Datentelegramm-Generierungsverfahren ein Datenbit pro Spannungsvollwelle übertragen.

Das Helligkeitsniveau ist im gezeigten Beispiel gemäß Fig. 3 auf 50% eingestellt (Phasenanschnittwinkel ϕ = 90°).

Der Vorteil des zweiten Datentelegramm-Generierungsverfahrens besteht darin, dass Datentelegramme sowohl über den Eisenkerntransformator 21 als auch über den elektronischen Transformator 22 übertragen werden können. Bei einem größeren Verschiebungswinkel ± Δ (z. B. Δ = 18°) ist bei Einsatz von Glühlampen als Leuchtmittel allerdings ein Flackern (Helligkeitsschwankungen) erkennbar. Wird der Verschiebungswinkel Δ verkleinert, so nimmt auch das Flackern ab, allerdings wird bei verkleinertem Verschiebungswinkel Δ auch die Datentelegrammübertragung zunehmend unsicherer. Ähnlich wie beim ersten Datentelegramm-Generierungsverfahren gemäß Fig. 2 tritt auch beim zweiten Datentelegramm-Generierungsverfahren gemäß Fig. 3 eine Sättigung des Eisenkerntransformators 21 auf, was zu unerwünschten Stromspitzen führt und die Datentelegrammauswertung erschwert.

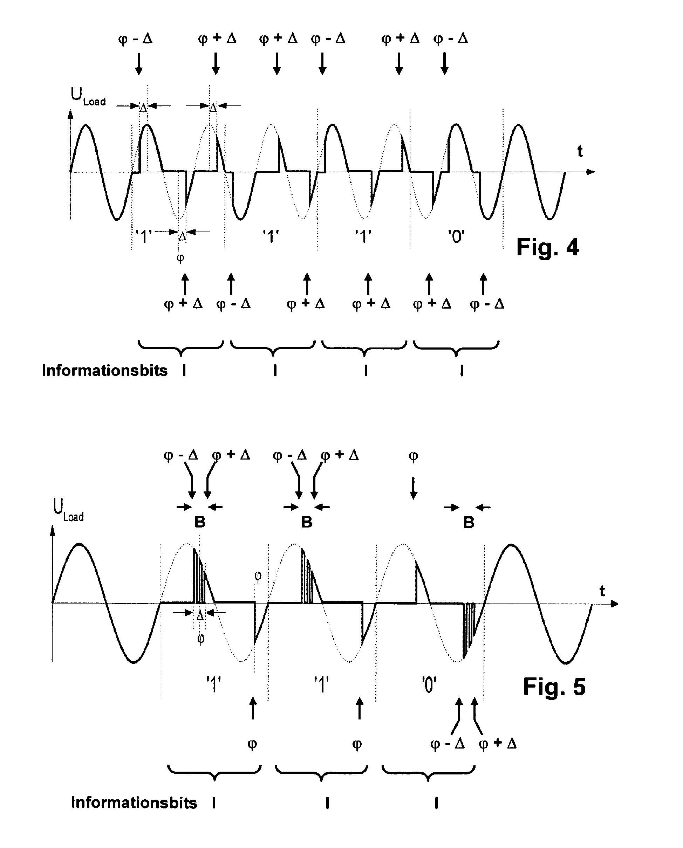

In Fig. 4 ist der Datentelegrammaufbau gemäß einem dritten Datentelegramm-Generierungsverfahren dargestellt. Das erste und das zweite Datentelegramm-Generierungsverfahren haben den Nachteil, dass ein Eisenkerntransformator 21 in die Sättigung geht, was zu unerwünschten Stromspitzen führt und den Nulldurchgang der Spannung verschiebt. Diese Verschiebung erschwert das Messen des Phasenanschnittwinkels (bzw. Phasenabschnittwinkels) ϕ und erhöht damit die Fehleranfälligkeit. Beim dritten Datentelegramm-Generierungsverfahren wird dieser Effekt reduziert, indem die zweite Spannungshalbwelle eines Datenbits in invertierter Form wiederholt wird. Dadurch ergibt sich eine Datenbitlänge von drei Spannungshalbwellen:
- Bei einem Datenbit "1" sind die drei Spannungshalbwellen also bei ϕ - Δ, ϕ +
   Δ , ϕ + Δ angeschnitten.
- Bei einem Datenbit "0" sind die drei Spannungshalbwellen also bei ϕ + Δ, ϕ -
   Δ , ϕ - Δ angeschnitten.

Bei diesem dritten Datentelegramm-Generierungsverfahren ist ebenfalls keine Startsequenz vorgesehen. Durch den vorgeschlagenen Ansatz wird die frühe Entsättigung des Eisenkerntransformators 21 unterstützt, da an der Grenze von einem Datenbit zum nächsten Datenbit eine symmetrische Ansteuerung des Eisenkerntransformators stattgefunden hat. Das Helligkeitsniveau ist im gezeigten Beispiel gemäß Fig. 4 auf 50% eingestellt (Phasenanschnittwinkel ϕ = 90°).

Der Vorteil des dritten Datentelegramm-Generierungsverfahrens besteht also darin, dass Sättigungseffekte an den Datenbitgrenzen reduziert werden. Durch die vergrößerte Datenbitlänge können allerdings weniger Informationen respektive Datenbits innerhalb derselben Zeitspanne bei Vergleich mit dem ersten und dem zweiten Datentelegramm-Generierungsverfahrens übertragen werden. Ferner ist die Energiebilanz eines Datentelegramms nicht notwendigerweise ausgeglichen. Werden beispielsweise ausschließlich Datenbits "0" bzw. ausschließlich Datenbits "1" übertragen, so würde die resultierende Helligkeit am Leuchtmittel unerwünscht ansteigen bzw. sinken.

In Fig. 5 ist der Datentelegrammaufbau gemäß einem vierten Datentelegramm-Generierungsverfahren dargestellt. Das Ziel dieses vierten Datentelegramm-Generierungsverfahrens ist eine weitere Herabsetzung des Flackerns (Helligkeitsschwankungen) von Glühlampen an der Netzspannung während der Übertragung von Datentelegrammen. Es wird wiederum ein Datenbit pro Spannungsvollwelle übertragen:
- Ein Datenbit "1" ist durch einen kurzen Burst B von Impulsen rund um den Phasenanschnittwinkel oder Phasenabschnittwinkel ϕ der positiven Spannungshalbwelle sowie eine unmodulierte an- oder abgeschnittene negative Spannungshalbwelle gekennzeichnet.
- Ein Datenbit "0" ist durch eine unmodulierte an- oder abgeschnittene positive Spannungshalbwelle sowie einen kurzen Burst B von Impulsen rund um den Phasenanschnittwinkel oder Phasenabschnittwinkel ϕ der negativen Spannungshalbwelle gekennzeichnet.
- Der Burst beginnt bei ϕ - Δ/2 und endet bei ϕ + Δ/2.
- Die Frequenz des Bursts ist derart zu wählen, dass ein eingesetzter Eisenkerntransformator 21 nicht in Sättigung geht, z. B. 36 kHz.

Bei diesem dritten Datentelegramm-Generierungsverfahren ist ebenfalls keine Startsequenz vorgesehen. Das Helligkeitsniveau ist im gezeigten Beispiel gemäß Fig. 5 auf 25% eingestellt (Phasenanschnittwinkel ϕ = 135°).

Je nach angeschlossener Last erweist sich ein anderes der vorstehend erläuterten Datentelegramm-Generierungsverfahren als vorteilhaft:

| Anschluss-szenario | Schlagwort | auszuwählendes Daten-telegramm-Generierungsverfahren | Lastart Impedanz | Betriebsart |
|---|---|---|---|---|
| Figuren 7, 8, 9 | Last an Netz-spannung | viertes Datentelegramm-Generierungsverfahren | R (ohmsch) | Phasen-abschnitt |
| Figuren 10, 11, 12 | Last an Eisen-kerntransformator | drittes Datentelegramm-Generierungsverfahren | L (induk-tiv) | Phasen-anschnitt |
| Figuren 13, 14, 15 | Last an elektroni-schem Transfor-mator | zweites Datentele-gramm-Generierungsverfahren | C (kapazi-tiv) | Phasen-abschnitt |

Dabei ist es unerheblich, ob es sich um LEDs oder Glühlampen als Leuchtmittel handelt. Der bei herkömmlichen Universaldimmern bereits bekannte Ansatz, die Lastarten in ohmsche Lastarten R, induktive Lastarten L und kapazitive Lastarten C einzuteilen und die geeignete Betriebsart - Phasenanschnitt oder Phasenabschnitt - in Abhängigkeit des Vorliegens einer dieser Lastarten auszuwählen, wird übernommen und auf die digitale Datenübertragung respektive Datentelegrammübertragung ausgeweitet. Neben der Wahl der Betriebsart wird die Übertragung von Datentelegrammen derart gewählt, dass Störeffekte, wie insbesondere Sättigung des Eisenkerntransformators und Flackern möglichst gering ausfallen. Mischlasten unterliegen hier der Randbedingung, dass sie eine ähnlich gelagerte Impedanz R, L oder C aufweisen müssen. Eine LED an Netzspannung muss sich also ohmsch verhalten wie eine Glühlampe, damit die resultierende Gesamtlast respektive Mischlast als ohmsch klassifiziert werden kann.

Vorstehend liegt bei der Beschreibung der Fokus auf der Modulation eines Wechselsignals mit Phasenanschnitt. Die vorgeschlagenen Datentelegramm-Generierungsverfahren sind in gleicher Weise jedoch auch für die Modulation eines Wechselsignals mit Phasenabschnitt realisierbar.

Für alle vorstehend behandelten Ausführungsformen gilt, dass während der Startphase vorzugsweise eine Lasterkennung durchgeführt wird, um zunächst zu detektieren, ob eine ohmsche oder induktive oder kapazitive Lastart vorliegt und um dementsprechend das vorteilhafteste Datentelegramm-Generierungsverfahren auszuwählen.

Die Datenübertragung soll unidirektional an alle Leuchtmittel erfolgen. Ein Teil der in Form von Datenbits übertragenen Datensequenz wird als Adresse erzeugt / interpretiert, so dass auf diese Art und Weise Leuchtmittel individuell - "Unicast" - oder als Gruppe - "Multicast" - angesprochen / eingestellt werden können. Ist dasselbe Verhalten für alle Leuchtmittel erwünscht, kann auch ein "Broadcast" realisiert werden. Die unidirektionale Übertragung hat zur Konsequenz, dass kein Rückkanal existiert, über den die angeschlossenen Leuchtmittel etwaige Übertragungsfehler an das Steuergerät zurückmelden können.

Allgemein ist es z. B. aus der EP 618 667 B1 bekannt, dass ein Phasenanschnitt durch eine Verzögerung des Einschaltens der Last erreicht wird (Zündverzögerung) und beim Nulldurchgang der Wechselspannung (Versorgungsspannung) endet, also am Ende der jeweiligen Wechselstromhalbwelle. Beim Phasenabschnitt erfolgt keine Zündverzögerung, so dass die Schaltstrecke des steuernden Halbleiters schon bei Beginn der Halbwelle durchgeschaltet, aber noch vor ihrem Ende abgeschaltet wird. Um hohe Abschaltspannungen zu vermeiden, müssen induktive Lasten im Phasenanschnitt betrieben werden und um hohe Einschaltströme zu vermeiden, benutze man bei kapazitiven Lasten den Phasenabschnitt.

### Bezugszeichenliste

- 1: Steuergerät (Dimmer)
- 2: Datenquelle
- 3: Kanalkodierer
- 4: Modulator
- 5: Lastmodul (Lampe inklusive Leuchtmittel)
- 6: Demodulator
- 7: Kanaldekodierer
- 8: Datensenke
- 9: Übertragungskanal (Lastleitung)
- 10: -
- 11: Lastmodul
- 12: LED
- 13: Netzteil
- 14: Leistungsglied (LED Driver)
- 15: Ansteuerschaltung (LED Control)
- 16: Dekodierer
- 17: -
- 18: Versorgungsspannungsquelle
- 19: LED als Leuchtmittel
- 20: Glühlampe als Leuchtmittel
- 21: Eisenkerntransformator
- 22: elektronischer Transformator
- B: Burst
- I: Informationsbits einer Informationssequenz, Datenbit "1" oder "0"
- L: Phasenleiter der Versorgungsspannungsquelle
- L': Lastleitung
- N: Neutralleiter (Nulleiter) der Versorgungsspannungsquelle
- S: Startbit einer Startsequenz
- t: Zeit
- U_{Load}: Spannung an der Last respektive Lampe
- Δ: Verschiebungswinkel
- ϕ: Phasenanschnittwinkel bzw. Phasenabschnittwinkel

## Patentansprüche

1. Datentelegramm-Generierungsverfahren zur Ansteuerung mindestens eines Lastmoduls bzw. einer Lampe (5, 11) mittels eines am Phasenleiter (L) einer Versorgungsspannungsquelle (8) angeschlossenen Steuergeräts (1) über eine Lastleitung (L'), wobei die Übertragung der Helligkeitsinformation mittels Phasenanschnitt oder Phasenabschnitt erfolgt und wobei auf dieses Spannungssignal das Datentelegramm aufmoduliert wird,
• wobei ein Datenbit pro Spannungsvollwelle übertragen wird,
• wobei die Informationen respektive Datenbits durch eine symmetrische Umtastung des Phasenanschnittwinkels oder Phasenabschnittwinkels ϕ um einen Verschiebungswinkel Δ aufgeprägt werden,
• so dass aufeinanderfolgende Spannungshalbwellen entweder bei ϕ - Δ / ϕ +
Δ oder bei ϕ + Δ / ϕ - Δ angeschnitten werden, je nachdem, ob ein Datenbit "1" oder ein Datenbit "0" zu übertragen ist.

2. Datentelegramm-Generierungsverfahren nach Anspruch 1, **dadurch gekennzeichnet, dass** die zweite Spannungshalbwelle eines Datenbits jeweils in invertierter Form wiederholt wird, wodurch sich eine Datenbitlänge von jeweils drei Spannungshalbwellen ergibt, so dass aufeinanderfolgende Spannungswellen entweder bei ϕ - Δ / ϕ + Δ / ϕ + Δ oder bei ϕ + Δ / ϕ - Δ / ϕ - Δ angeschnitten werden, je nachdem, ob ein Datenbit "1" oder ein Datenbit "0" zu übertragen ist.

3. Datentelegramm-Generierungsverfahren zur Ansteuerung mindestens eines Lastmoduls bzw. einer Lampe (5, 11) mittels eines am Phasenleiter (L) einer Versorgungsspannungsquelle (8) angeschlossenen Steuergeräts (1) über eine Lastleitung (L'), wobei die Übertragung der Helligkeitsinformation mittels Phasenanschnitt oder Phasenabschnitt erfolgt und wobei auf dieses Spannungssignal das Datentelegramm aufmoduliert wird,
• wobei ein Datenbit pro Spannungsvollwelle übertragen wird,
• wobei die Informationen durch einen kurzen Burst (B) von Impulsen mit der Breite eines Verschiebungswinkels Δ rund um den Phasenanschnittwinkel oder Phasenabschnittwinkel ϕ der einen Spannungshalbwelle sowie eine unmodulierte an- oder abgeschnittene andere Spannungshalbwelle gekennzeichnet ist,
• wobei der Burst (B) bei ϕ - Δ/2 beginnt und bei ϕ + Δ/2 endet.

4. Datentelegramm-Generierungsverfahren nach den vorstehenden Ansprüchen 1 - 3, **dadurch gekennzeichnet, dass** während der Startphase eine Lasterkennung durchgeführt wird, um zunächst zu detektieren, ob eine kapazitive oder induktive oder ohmsche Lastart vorliegt und um dementsprechend
• das Datentelegramm-Generierungsverfahren gemäß Anspruch 1 bei Vorliegen einer kapazitiven Lastart auszuwählen,
• das Datentelegramm-Generierungsverfahren gemäß Anspruch 2 bei Vorliegen einer induktiven Lastart auszuwählen und
• das Datentelegramm-Generierungsverfahren gemäß Anspruch 3 bei Vorliegen einer ohmschen Lastart auszuwählen.
